# EUROPEAN PATENT APPLICATION

(11) **EP 4 596 464 A1**
(43) Date of publication of application: **06.08.2025**
(21) Application number: 25153313.9
(22) Date of filing: 22.01.2025
(51) Int. Cl.: B65G 47/14, B67B 3/064

(54) **DEVICE FOR RECRUITING AND LOADING CAPS FOR CONTAINERS OF BIOLOGICAL SAMPLES**

(30) Priority: 31.01.2024 IT 202400001938
(71) Applicant: Inpeco SA, 6883 Novazzano (CH)
(72) Inventor: PEDRAZZINI, Gianandrea, CH-6883 Novazzano (CH); FANTINO, Umberto, CH-6883 Novazzano (CH)
(74) Representative: Buzzi, Notaro & Antonielli d'Oulx S.p.A.

(57) **Abstract**

A device (8) for recruiting and loading a plurality of caps (6) for closing containers (2) of biological material, comprising a cap container (10) arranged to contain in bulk a plurality of caps (6), a cap recruitment system (11) arranged to convey the caps (6) collected within the cap container (10), along a predetermined direction, a channel device (12) arranged to receive the caps (6) conveyed by the recruitment system (11) and direct the caps (6) downstream of the channel device (12), and a slide (14) arranged to shift the caps (6) from the channel device (12) towards a pick up position wherein the caps (6) can be respectively picked up for the application on a respective container (2) without a cap (6) positioned at a working point (7).

## Description

### Field of the invention

The present invention concerns a device for recruiting and loading a plurality of caps for containers of biological samples.

### Prior art

Nowadays, in the context of laboratory automation systems, it is widespread the use of automated apparatuses intended for the closing of containers of biological material, especially test tubes, wherein the cap has been previously removed (i.e. to draw the biological sample contained therein) and which are therefore travelling uncapped along an automatic conveyor of the automation system itself.

Typically, such apparatuses comprise a device for recruiting and loading caps intended for the aforementioned closing and which receives the caps discharged therein, either manually or by means of an automated system, to then direct them one by one to a test tubes closing device comprising a movable head able to grasp each single cap and apply it to the uncapped test tube properly blocked in a position below the closing device.

It is therefore necessary to make the caps available to the recruiting and loading device from a container of caps, i.e. a hopper, where they are discharged, as mentioned above either manually or in an automated manner, and then lifted by means of a system that acts first by stirring the caps themselves and then by means of an engagement mechanism that allows them to rise.

It is essential, therefore, to devise a system that allows a nearly continuous recruiting and loading of the caps.

There are known solutions wherein a system of movable combs, which continuously slide on fixed combs, is used for the purpose of achieving a lifting of the caps. This solution aims to ensure with a good statistical frequency the appropriate engagement of a cap by the recruiting system. It should be noted that the cap must be engaged with a proper orientation, i.e. one that does not cause its immediate fall due to the unbalance with respect to the center of gravity of the cap.

In this regard, the Applicant has been granted the European Patent EP 2235545 B1 which describes a test tube closing apparatus, employing a device for recruiting and loading such caps.

However, problems arise because it has been experimentally observed that the frequency with which known recruiting systems engage caps with a proper orientation can often be low, and thus that a considerable amount of time may pass before a new cap is engaged by the comb system, if at all leading to a stalemate in which no more caps are lifted. This clearly reflects in a stalemate with regard to the consequent operation of closing the test tube, which in the meantime is stuck waiting along the automatic conveyor of the laboratory automation system, with severe damage in terms of operability and promptness in the analyses that must be performed on the biological samples.

### Object of the invention

The object of the present invention is to make improvements to known devices for recruiting and loading caps for test tubes, increasing their continuity of operation and ensuring a higher frequency in the supply of caps to the closing device, i.e. far greater efficiency and without the problems that characterize known solutions.

A further object is to ensure the structural compactness of the recruiting and loading device of the invention, making it as space-saving as possible within the laboratory automation system and ensuring easier maintenance when needed.

Still another object is to use materials that are easily available and low cost.

### Summary of the invention

In view of achieving one or more of the aforementioned objects, the invention relates to a device having the features of the appended claim 1.

Further advantageous features are indicated in the appended dependent claims.

The invention also relates to a process according to the features indicated in the appended claim 13.

### Detailed description of the invention

Further features and advantages of the invention will result from the description that follows with reference to the accompanying drawings, provided purely by way of non-limiting example, wherein:
- Figure 1 is a perspective view of an apparatus suitable for automatic closing of containers of biological material including a device for recruiting and loading caps according to the invention,
- Figure 2 shows a perspective view, rotated 180° from the previous one, of the device for recruiting and loading caps illustrated in the previous figure,
- Figures 3 and 4 depict a side view, in two successive activation stages, of a detail of the device for recruiting and loading caps according to the invention,
- Figures 5A, 5B, 5C illustrate three separate views of a further detail of the device for recruiting and loading caps according to the invention,
- Figure 6 is a further perspective view of the cap recruitment system according to the invention,
- Figure 7 shows a side view of the components illustrated in the previous figure,
- Figure 8 depicts a detail of a lower portion of the cap recruitment system according to the invention,
- Figure 9 shows a sectional view of a detail of an upper portion of the cap recruitment system according to the invention, and
- Figures 10, 11 illustrate further detail features of the device for recruiting and loading caps, according to the invention.

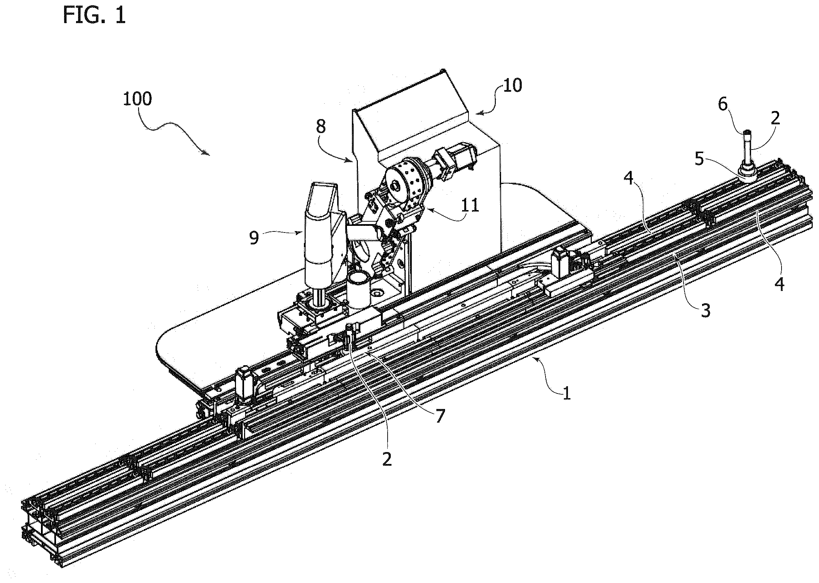

With reference to figure 1, an apparatus 100 suitable for automatic closing of containers 2 of biological material is mounted on an automatic conveyor 1 of a laboratory automation system, able to transport such containers 2 of biological material, preferably test tubes, containing samples of biological material.

According to a per se known technique, the conveyor 1 includes a conveyor belt 3 responsible for automatic transport of the containers 2 towards various modules for processing and analyzing samples of biological material (not illustrated in the figures), located either upstream or downstream of the closing apparatus 100, through main and secondary lanes 4 of the conveyor belt 3 aimed at the appropriate routing of the containers 2 towards these modules.

The transport of the containers 2 on the conveyor belt 3 is allowed by the use of suitable test tube transport devices 5 that ensure the verticality and stability of the test tubes during their processing. Such transport devices 5 may possibly be appropriately diverted and stopped on conveyor belt 3 by means of suitable stop and diverting devices included in the conveyor 1.

Containers 2 can identically travel along the conveyor belt 3 either capped, i.e. with the application at their opening of a cylindrical cap 6, or uncapped, i.e. without said cap 6, because, for example, along the way it became necessary for a module to draw the biological sample contained in the container 2.

The following discussion concerns containers 2, preferably test tubes, initially uncapped, that need to be re-capped through reapplication of the cap 6, for example to be routed to a module that needs to receive closed containers 2.

According to a preferred application, each uncapped container 2 is conveyed along a secondary lane 4 interfacing with the closing apparatus 100, and stopped at a working point 7 in a stable and vertical position.

The apparatus 100 suitable for automatic closing of test tubes comprises a device 8 for recruiting and loading caps and a device 9 for closing test tubes, and essentially traces what has already been illustrated in the aforementioned European Patent EP 2235545 B1 of the Applicant, with due differences that will be clearer from the following description.

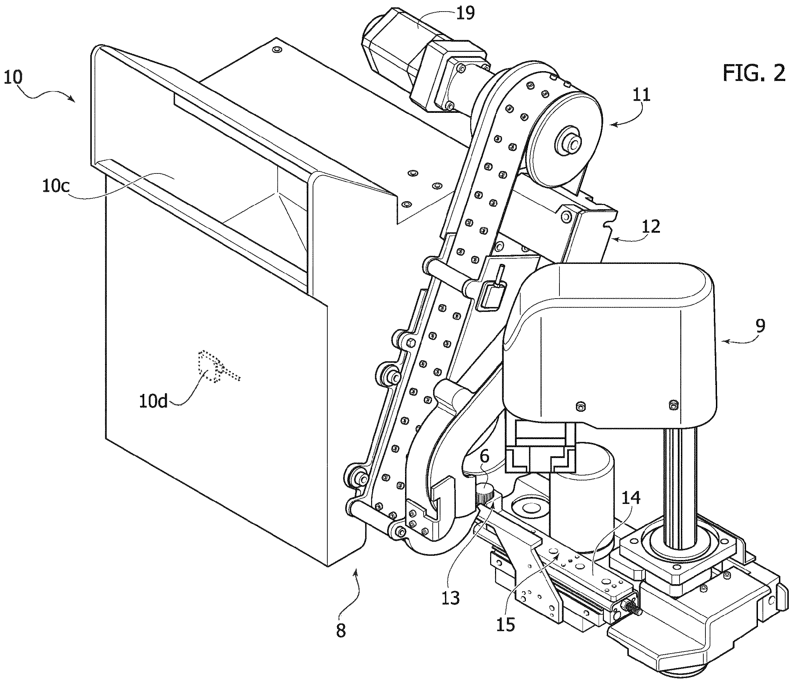

In particular, with reference to figure 2, the device 8 for recruiting and loading of caps comprises:
- a container 10 of caps arranged to contain the caps 6 to be used during the working cycle,
- a cap recruitment system 11 arranged to convey the caps 6 collected within the cap container 10,
- a channel device 12 arranged to receive the caps 6 from the recruitment system 11 and direct the caps 6 towards a loading chamber 13,
- a slide 14 arranged to shift the caps 6 from the channel device 12 towards a pick up position below the test tubes closing device 9, which is controlled to pick up the just-shifted cap 6 and apply it to the container 2 which is stationary at the working point 7.

The device 8 for recruiting and loading further comprises at least one electronic control unit configured and programmed to control the activation of the various components.

The constructional and functional details of the closing device 9 are known per se and thus are not the object of the present invention.

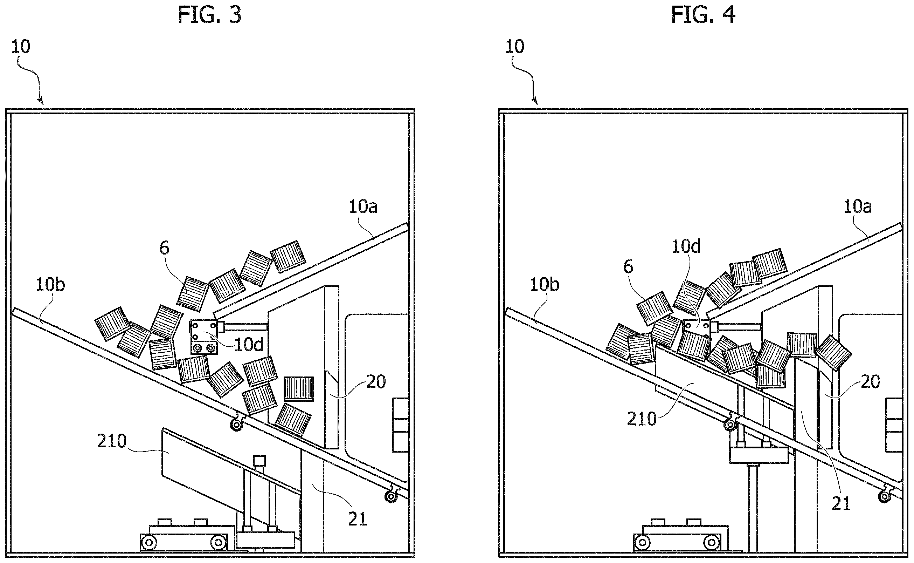

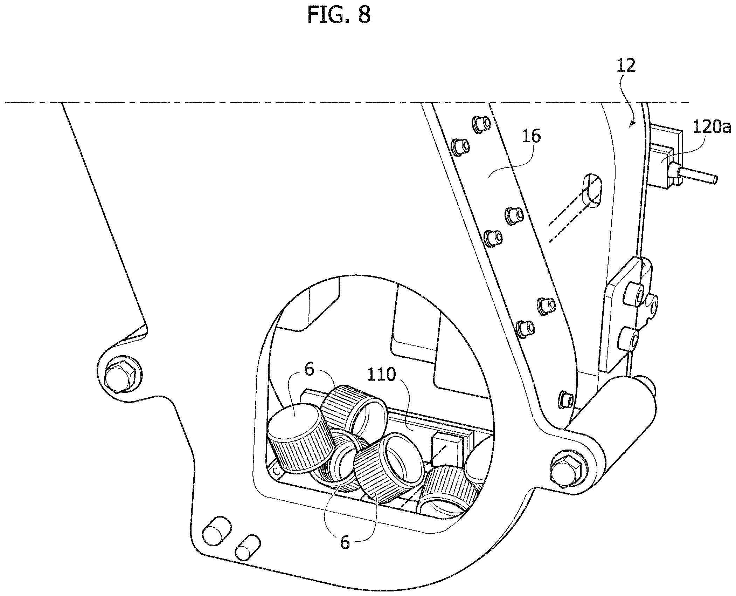

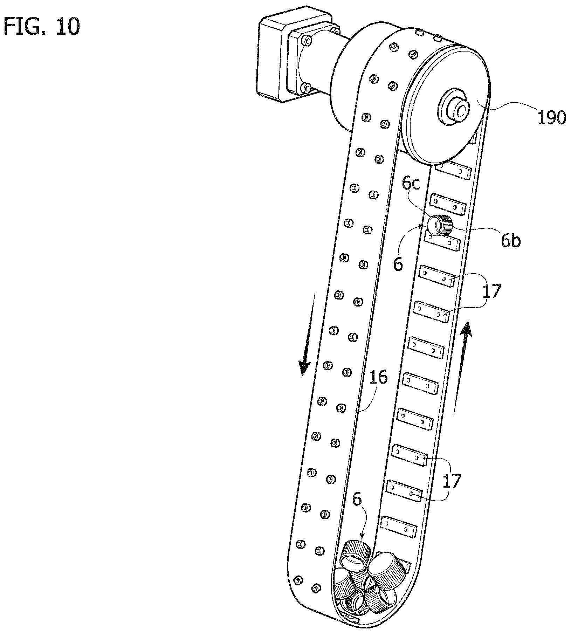

The container 10 of caps is arranged laterally with respect to the recruitment system 11 and in communication with the same. In accordance with what is shown in figures 2, 3, 4, the cap container 10 has at least one inlet 10c from which to introduce the caps 6 and at least one inclined chute 10a, 10b able to promote a flow of the caps 6 towards the recruitment system 11. Caps 6 can be discharged into the container 10, through inlet 10c, either manually by an operator or by an automated transport mechanism of a known type (not shown) in direct communication with the container 10. In one or more embodiments, as in the one illustrated in figures 3, 4, the cap container 10 comprises a first chute 10a on which caps 6 introduced from the inlet 10c can slide, and a second chute 10b extended below the first chute 10a and inclined in the opposite direction, to receive caps 6 from the first chute 10a and direct caps 6 towards a collection portion of the recruitment system 11 (illustrated in figures 8, 10).

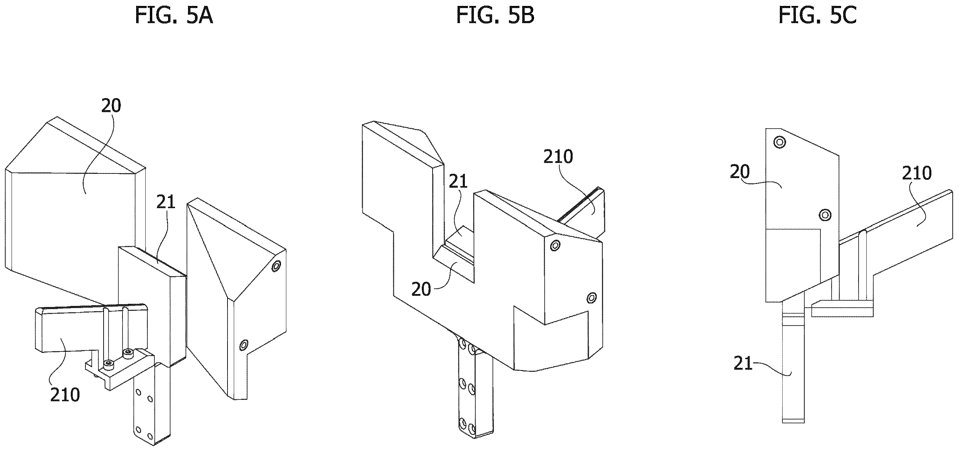

As illustrated in figures 3-5C, the device 8 comprises a contact wall 20 positioned as a barrier at the end or along said at least one inclined chute 10a, 10b, so as to accumulate the caps 6 along said at least one inclined chute 10a, 10b and prevent the caps 6 from reaching without obstacles the collection portion included within the recruitment system 11. With reference to the illustrated embodiment, the contact wall 20 is positioned to interrupt the flow of caps 6 along said second chute 10b.

According to a further feature, the device 8 further comprises at least one movable element 21, 210 spaced near the contact wall 20, which can be moved between a lowered position irrelevant regarding the caps 6 accumulated against the wall 20, and a raised position able to move the caps 6 in contact with the wall 20, so as to allow the caps 6 to cross the contact wall 20 and fall into the collection portion of the recruitment system 11.

In one or more embodiments, adjacent to the contact wall 20, particularly along a side of the contact wall 20 intended to come into contact with the accumulated caps 6, said at least one movable element comprises a palette 21 movable between a lowered position (figure 3) that is irrelevant regarding the caps 6 accumulated against the wall 20, and a raised position (figure 4) able to move the caps 6 in contact with and immediately near the wall 20, thus causing them to pass over the contact wall 20 and fall into the collection portion of the recruitment system 11 (illustrated in figures 8, 10). Of course, to achieve the above mentioned raised position of the palette 21, the associated inclined chute 10b must have a corresponding opening to allow the raising of the palette 21. At regular intervals, the electronic unit imparts a command signal to raise the palette 2, so as to direct the caps 6 towards the system 11 downstream of the cap container 10.

According to a further preferred feature, said at least one movable element comprises a comb 210 (Figures 3-5C), integral with the palette 21, which penetrates a hole formed in the chute 10b (not visible in the figures) thereby helping to further dislodge the caps 6 and facilitate the passage of the caps 6 into the accumulation zone downstream of the chute.

Although the palette 21 and the comb 210 are illustrated in the appended drawings in association with a container with a double chute, it will be appreciated that the same can be provided individually or in combination, even in the case of a container with a single chute.

In light of the features described above, it will then be appreciated that in operation there is substantially a gradual release of the caps 6 towards the recruitment system 11, avoiding congesting it.

According to a further feature, the cap container 10 is also equipped with a sensor 10d (figures 2-4), intended to discriminate the situation wherein within the container 10 the number of caps 6 is below a predetermined threshold, and which can preferably activate an alert signal regarding the need to introduce (as mentioned above, either manually or in an automated manner) new caps 6 within the container 10.

On the other hand, as illustrated in figure 8, a cap presence sensor 110 is present even at the base of the recruitment system 11, in particular at its cap collection portion, wherein caps coming from said at least one chute 10a, 10b are collected, to discriminate the possible situation wherein the recruitment system 11 is completely devoid of caps 6 and it is therefore necessary to command the routing of new caps 6 to the recruitment system 11, through the appropriate raising of the palette 21.

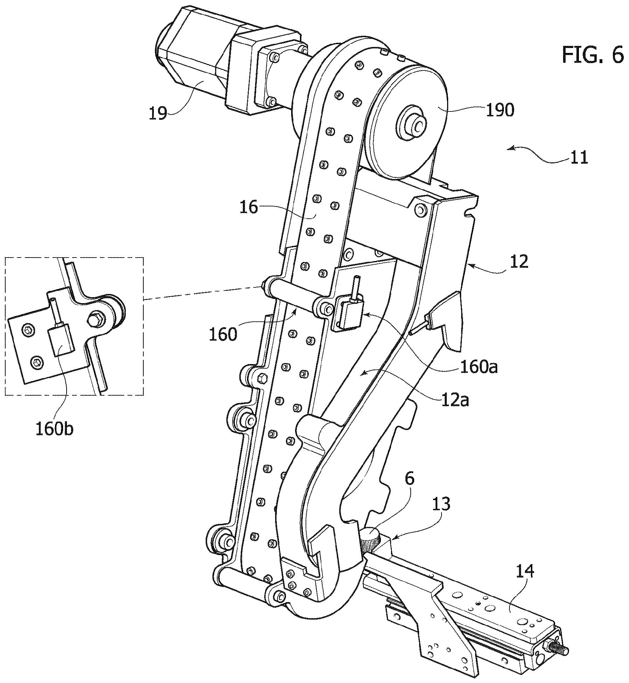

In accordance with what is illustrated in figures 2, 6-8, 10, the recruitment system 11 comprises a closed loop belt 16 mounted on at least one pulley 190 and driven continuously by an electric motor 19. The belt 16 runs along a direction which is vertical or inclined with respect to a vertical axis, starting from the base of system 11, where the collection portion receiving caps 6 from container 10 is provided, until reaching an inlet portion of the channel device 12. The part of the belt that is at the bottom of the loop forms the base surface for the collection of the caps 6 coming from chutes 10a, 10b (Figures 8, 10).

Embodiments provide for an inclination between 20° and 30°, preferably 25°.

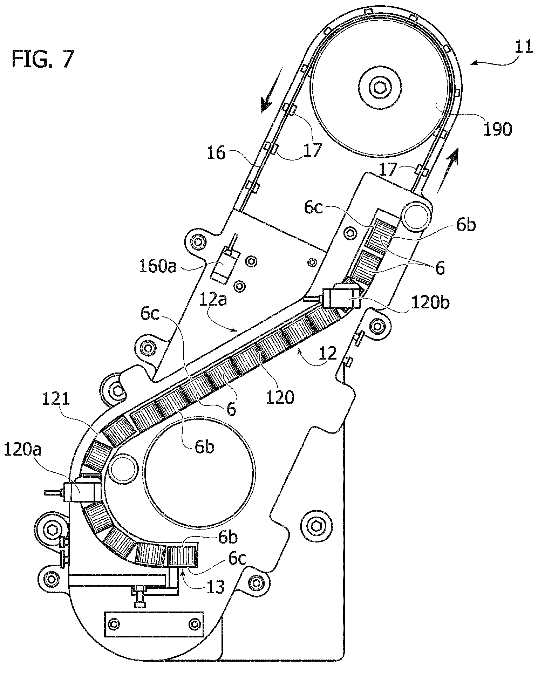

According to a further feature illustrated in figures 7, 9, 10, the belt 16 has along its entire internal surface a plurality of steps 17, mutually spaced along the extension of the belt 16, arranged to engage the caps 6 accumulated in the collection portion and causing them to rise upwardly, i.e. towards the inlet portion of the channel device 12. In accordance with the illustrated embodiment, the steps 17 are substantially conformed in the shape of a parallelepiped and are preferably made of metal material.

In a concrete embodiment, the dimension in width of each step 17 is equal to about 1/3 of the height along the vertical direction of a recruited cap 6, sufficient in any case to ensure engagement and suitable lifting of the cap 6 when arranged horizontally, that is with its cylindrical side surface 6a lying on the step 17.

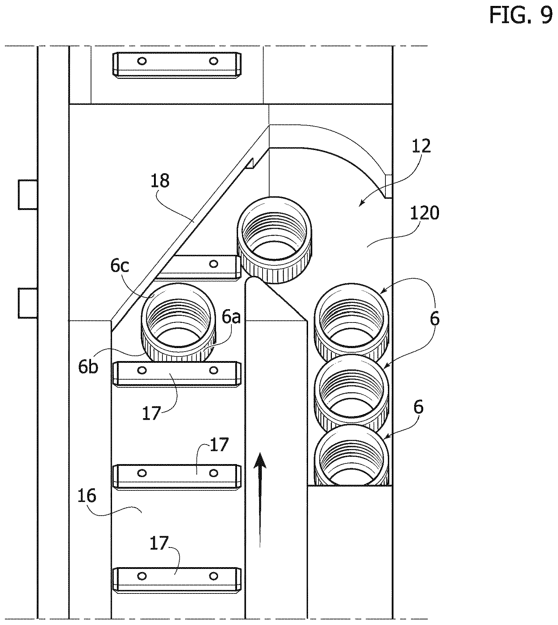

In one or more embodiments, each cap 6 has a substantially flat outer surface 6b intended to be faced outwards when mounted on the respective container 2, and an inner surface 6c with a protruding profile for the closing of the container. With reference to these features, it should be noted that the caps 6 conveyed by the belt 16 conveniently continue their ascent towards the inlet portion of the channel device 12 only when they are respectively engaged by a step 17 so that it is the outer surface 6b of the cap itself that rests against the belt 16 (figures 9, 10). In case they are instead engaged in the ascent mechanism in the opposite position, they will fall since unbalanced with respect to their own center of gravity. Their fall is certainly also influenced by the inclination of the recruitment system 11, which therefore helps a recruitment of the caps only in the desired position, such that they then enter the channel device 12 with the outer surface 6b of the cap resting on a support surface 120 of the channel device 12 (figure 9).

The channel device 12 comprises a channel primarily developed along a substantially vertical direction, sized to consecutively receive a plurality of caps 6 conveyed by the belt 16 along the ascent path to the inlet portion of the channel device 12, and direct the caps 6 along a descent path towards the slide 14. The channel device 12 has dimensions that are substantially complementary to those of the cap 6, such as to avoid unexpected tipping of the cap 6 moving along the channel device 12, which can at most only rotate about its axis. The channel has a first main support surface 120 and a second main surface 121 opposite to the first surface, sized to respectively contain caps 6 along outer surfaces 6b and inner surfaces 6c (Figure 7). A pair of side walls laterally contain caps 6 along the development of the channel.

The overall path of the channel device 12 comprises an upper section substantially parallel to a branch of belt for the ascent of the caps 6, a main section 12a, with an inclination between 55° and 65°, preferably 60°, and an end section substantially C-shaped, to suitably offer the caps 6 to the loading chamber 13, i.e. with the inner surface 6c resting on a housing 14a of the slide 14.

It should be noted how the lifting from the base of the recruitment system 11, by means of the belt 16, of a cap 6 rather than another, and consequently the engagement of the same by a step 17 in view of the subsequent ascent, has the features of randomness and is the result of the continuous shuffling of the caps 6 themselves that takes place at that portion of the system 11 because of the continuous rotation of the belt 16. However, this is consistent with the fact of discharging into the container 10 caps 6 that are all identical, which makes the order in which they reach the channel device 12 essentially irrelevant.

The upward path of each of the caps 6 along belt 16 ends at the inlet of channel device 12, until it encounters a suitably shaped profile 18 (figure 9) within the recruitment system 11 that causes a diversion of the cap 6 from the ascent direction and its fall by gravity within the channel device 12.

In some situations, it is necessary to cope with a jam of caps 6 rising from the belt 16 that is created at the profile 18, and which can cause a total block of the belt sliding. In this case, the electronic unit can be programmed and configured to activate a protection mechanism, stopping the electric motor 19. In this case, it is then driven the reverse rotation of the belt 16, which thus acts as a release of the jam of caps 6 (which in this way fall back and will be raised later), followed by the normal restart of the rotation of the belt 16 in the correct direction.

However, the situation of jam of caps 6 can also lead to slippage of the belt 16 on the pulley 190, so that the protection mechanism described above is not activated. In this case, a sensor 160 (Figures 7, 8), composed of an emitter 160a and a receiver 160b, nonetheless discriminates after a predetermined amount of time (typically in the order of a few milliseconds) that a step 17 has not passed by the sensor 160 itself, due to the belt 16 instead being stuck in that descent section. Again, reverse rotation of the belt 16 is driven, to release the jam of caps 6 similarly to what has already been described.

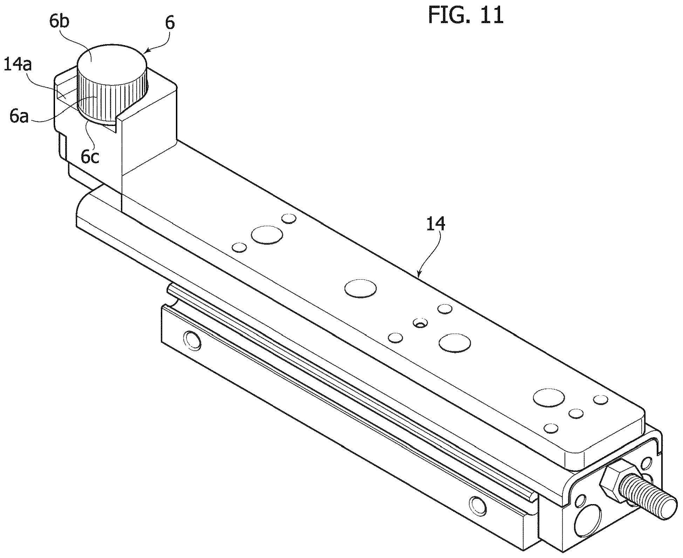

In operation, following the ascent of caps 6 from the recruitment system 11, there is an accumulation of caps 6 within the curved channel device 12 and, according to a First-In First-Out logic, they slide towards the loading chamber 13 wherein they are appropriately picked up by the slide 14, preferably pneumatically activated, which individually accommodates in sequence each cap 6 within the appropriate housing 14a (figure 11). The slide 14 is actuated to shift, preferably along a horizontal direction substantially parallel to the conveyor belt 3, the caps 6 one by one until they become available to the test tubes closing device 9.

According to a further feature, the channel device 12 has a first cap presence sensor 120a (figure 7), at a point near the end of the curved end path of the channel device itself, such as to discriminate the presence of a minimum number of caps 6 (preferably four, in addition to the one already occupying the loading chamber 13) to ensure that the column of accumulating caps 6 has sufficient weight to guarantee the fall of a subsequent cap 6 into the chamber 13 after the pick up, by the slide 14, of the cap 6 currently occupying the chamber 13 itself.

According to a further feature, the channel device 12 also has a second cap presence sensor 120b (figure 7), just below the inlet of the channel device 12, i.e. the drop point of caps 6 ascending from the belt 16. Such second sensor 120b discriminates the situation wherein the channel device 12 is full and therefore, since it cannot accommodate new caps 6, the operation of the belt 16 and more generally the recruitment system 11 must be stopped.

Once the cap 6 is offered to the test tubes closing device 9, the latter provides for the closing of containers 2 stopped at working point 7 according to what has already been described by the European Patent EP 2235545 B1 or anyway already known from other similar devices.

Of course, the closing apparatus 100 is able to appropriately perform the same operation on containers 2 that come in succession still uncapped, even at short time intervals, at working point 7.

As is evident from the above description, the use of a device for recruiting and loading caps according to the invention, within an apparatus able to close test tubes in a laboratory automation system, provides a significant improvement, compared to known solutions, in terms of continuity in the stirring of caps, in particular at the base of the recruitment system, and consequently in the engagement and ascent of the same, leading to the elimination of the stalemates that are created in known recruitment and loading devices, wherein the situation in which, after a given amount of time, no more caps are lifted by the recruitment system can occur.

This is exceedingly favored by the presence in the recruitment system of the steps along the internal surface of the belt, since this position certainly favors, compared to known solutions, a greater probability of engagement and ascent of the caps by the belt, during the continuous rotation of the latter.

In addition, the presence of a channel device able of accommodating numerous just-ascended caps, even more thanks to the curved profile of the same which extends its length, allows compared to known solutions to have a more capable accumulation area of the caps ready to be offered to the test tubes closing device placed downstream, and which can be supplied with a greater frequency leading to a speed up of the closing operation of test tubes circulating uncapped along the automation system, as well as to their faster routing to any other processing modules placed downstream.

Moreover, with respect to known solutions where the recruiting and loading devices are often hidden below the plane of the automatic conveyor of the automation system, the device according to the invention is positioned on the plane of the conveyor itself, thus facilitating any maintenance operation on the same, and has a significantly reduced footprint.

Studies and experiences conducted by the Applicant have therefore shown that the use of such a recruitment and loading device allows to significantly speed up the flow of biological samples within laboratory automation systems, avoiding the slowdowns associated with the operation of closing of test tubes containing the aforementioned biological samples, in particular with the recruitment of the caps and their sending to the closing device.

Naturally, without prejudice to the principle of the invention, the construction details and the embodiments may vary widely with respect to what is described and illustrated purely by way of example, without thereby departing from the scope of protection of the present invention, as defined in the appended claims.

## Claims

1. Device (8) for recruiting and loading a plurality of caps (6) for closing containers (2) of biological material, comprising:
- a cap container (10) arranged to contain in bulk a plurality of caps (6),
- a cap recruitment system (11) in communication with said at least one cap container (10), arranged to convey the caps (6) collected within the cap container (10), along a predetermined direction,
- a channel device (12) in communication with said recruitment system (11), arranged to receive the caps (6) conveyed by the recruitment system (11) and direct the caps (6) downstream of the channel device (12),
- a slide (14) arranged to shift the caps (6) from the channel device (12) towards a pick up position wherein the caps (6) can be respectively picked up for the application on a respective container (2) without a cap (6) positioned at a working point (7),
- wherein said cap container (10) comprises at least one inlet (10c) from which to introduce the caps (6) and at least one inclined chute (10a, 10b) able to promote a flow of the caps (6) towards the recruitment system (11),
- wherein said recruitment system (11) comprises a closed loop belt (16) extended along a direction vertical or inclined with respect to a vertical axis, arranged to convey the caps (6) along an ascent path from a collection portion of the system (11) receiving the caps (6) coming from the cap container (10), towards an inlet portion of the channel device (12),
- wherein the belt (16) comprises an internal contact surface with the caps (6), provided with a plurality of steps (17) mutually spaced along the extension of the belt (16) and arranged to respectively engage the caps (6) accumulated in the collection portion,
- wherein the channel device (12) comprises a channel sized to consecutively receive the caps (6) conveyed by the belt (16), contain a row of accumulated caps (6) and direct the caps (6) along a descent path from the inlet portion of the channel device (12) towards said slide (14).

2. Device (8) according to claim 1, comprising a contact wall (20) positioned as a barrier at the end or along said at least one inclined chute (10a, 10b), so as to accumulate the caps (6) along said at least one inclined chute (10a 10b) and prevent the caps (6) from freely reaching said collection portion of the recruitment system (11), said device (8) further comprising at least one movable element (21, 210) spaced near the contact wall (20), which can be moved between a lowered position irrelevant regarding the caps (6) accumulated against the wall (20), and a raised position able to move the caps (6) in contact with the wall (20) and allow the caps (6) to cross the contact wall (20) by falling into the collection portion of the recruitment system (11).

3. Device (8) according to claim 2, comprising a cap presence sensor (110) placed at the collection portion of the system (11), arranged to discriminate a situation wherein the recruitment system (11) is completely devoid of caps (6), and send a control signal to raise said at least one movable element (21, 210).

4. Device (8) according to any of the preceding claims, wherein the cap container (10) comprises a sensor (10d) arranged to discriminate a situation within the cap container (10) wherein the number of caps (6) is lower than a predetermined threshold value, and activate an alert signal regarding the need to introduce additional caps (6) within the cap container (10).

5. Device (8) according to any of the preceding claims, wherein the part of the internal surface of the belt (16) which comes to be in correspondence with a bottom part of said loop forms itself the collection portion of the system (11) receiving the caps (6) coming from the cap container (10).

6. Device (8) according to any of the preceding claims, wherein the belt (16) is inclined with respect to the vertical direction orthogonal to a conveyor belt (3) for transporting the containers (2), with an inclination between 20° and 30°.

7. Device (8) according to any one of the preceding claims, wherein each cap (6) comprises a substantially flat outer surface (6b) intended to face outwards when mounted on the respective container (2), and an inner surface (6c) with a protruding profile for the closure of the container (2), wherein the conformation of said steps (17) and the inclination of the belt (16) are made to achieve a transport of the individual caps (6) to the channel device (12), only if the caps (6) are respectively engaged by a step (17) with the outer surface (6b) of the cap (6) resting against the internal surface of the belt (16), so as to carry out a recruitment of the caps (6) only according to a predetermined position of the caps themselves, such that they enter the channel device (12) with the outer surface (6b) of the cap (6) resting on a main support surface (120) of the channel.

8. Device (8) according to any of the preceding claims, wherein the cap container (10) comprises a first chute (10a) on which the caps (6) introduced from the inlet (10c) can slide, and a second chute (10b) extended below the first chute (10a) and inclined in the opposite direction, to receive the caps (6) from the first chute (10a) and direct the caps (6) towards said collection portion of the recruitment system (11).

9. Device (8) according to claim 7, wherein said channel comprises a second main surface (121) opposed to said first main support surface (120), mutually spaced to contain a row of caps (6) along the outer (6b) and inner (6c) surfaces, and a pair of side walls to laterally contain said row of caps (6) along the length of the channel.

10. Device (8) according to claim 7, wherein the channel of the channel device (12) comprises an upper section substantially parallel to an ascending branch of the belt (16) for the ascent of the caps (6) from the collection portion towards the inlet portion of the channel device (12), a main section (12a) with an inclination between 55° and 65°, and a substantially C-shaped curved end section, to offer the caps (6) to the slide (14) with a predetermined orientation, in particular with the inner surface (6c) resting on a housing (14a) of the slide (14).

11. Device (8) according to any of the preceding claims, wherein the channel device (12) comprises a first cap presence sensor (120a) arranged to discriminate the presence of a minimum number of caps (6) in the channel, in order to ensure that the row of caps (6) in accumulation has sufficient weight to guarantee the fall of a successive cap (6) in the direction of the slide (14).

12. Device (8) according to claim 11, wherein the channel device (12) comprises a second cap presence sensor (120b) arranged to discriminate a situation wherein the channel is full of caps (6) and send a stop signal to arrest the motion of the belt (16).

13. Process for closing a plurality of containers (2) of biological material by means of respective caps (6), comprising the following steps:
- arranging a recruiting and loading device (8) according to any of the preceding claims,
- introducing a plurality of caps (6) within said cap container (10),
- operating said recruitment system (11) to convey the caps (6) collected within the cap container (10), along a predetermined direction,
- accumulating a plurality of caps (6) within said channel,
- actuating said slide (14) to shift the caps (6) from the channel device (12) towards a pick up position wherein the caps (6) can be respectively picked up for the application on a respective container (2) without a cap (6) positioned at a working point (7).
